Europäisches Patentamt

European Patent Office

Office européen des brevets

(11) Publication number: **0 541 949 A2**

# EUROPEAN PATENT APPLICATION

(21) Application number: **92116952.0**

(22) Date of filing: **05.10.92**

(51) Int. Cl.5: **H04N 7/13**

(30) Priority: **09.10.91 FI 914762**

(43) Date of publication of application:
**19.05.93 Bulletin 93/20**

(84) Designated Contracting States:
**DE ES FR GB IT NL SE**

(71) Applicant: **OY NOKIA AB**
**Etelaesplanadi 12**
**SF‑00130 Helsinki(FI)**

(72) Inventor: **Haikonen, Pentti**
**Ruutikatu 10 B 39**
**SF‑02600 Espoo(FI)**

(74) Representative: **Schroeter, Helmut et al**
**Schroeter, Fleuchaus, Lehmann Wehser,**
**Holzer & Gallo Patentanwälte Wolfratshauser**
**Strasse 145 Postfach 71 03 50**
**W‑8000 München 71 (DE)**

(54) **Method for video compression.**

(57) The invention relates to a video compression method for compressing a digitally coded video signal in connection with transmission, wherein image information is transmitted as successive image blocks (1) each comprising n x m pixels ($p_i$). For efficient utilization of the local spatial redundance of the image, (i) each image block (1) is scanned along a fractal curve (13) which divides the image block (1) into sub‑blocks ($A_i$; $a_i$) of at least one lower level of hierarchy so that one block of a higher level of hierarchy comprises several blocks of a lower level of hierarchy; (ii) the intensity values of pixels ($p_i$) in each block ($a_i$) of the lowest level of hierarchy are compared with each other, and each block ($a_i$) is coded by a common intensity value whenever the pixel intensity values fulfill a predetermined deviation condition ($\delta < \epsilon$); (iii) when each sub‑block ($a_i$; $A_i$) of the block ($A_i$, 1, respectively) of the higher level of hierarchy is coded by a common intensity value, the sub‑block intensity values are compared with each other, and each block ($A_i$; 1) of the higher level of hierarchy is coded by a common intensity value whenever the intensity values of its sub‑blocks ($a_i$, $A_i$, respectively) fulfill the predetermined deviation condition ($\delta < \epsilon$); and (iv) information about the way of coding of each block ($a_i$, $A_i$, 1) is transmitted to a receiver.

FIG. 1b

EP 0 541 949 A2

The invention relates to a video compression method for compressing a digitally coded video signal in connection with transmission. In the method, image information is transmitted as successive image blocks each comprising n x m pixels.

Effective video image compression coding should enable maximal utilization of the internal redundancy of the image. Further, errors caused by compression should concentrate in image areas where they are as invisible as possible (amplitude errors in contours). The widely used Discrete Cosine Transform (DCT) is suitable for intraimage compression with conventional images, whereas it is not suitable for text images nor for coding a difference image. In the coding of a difference image, the discrete cosine transform may even result in expansion in place of compression, while the actual compression is effected by so−called amplitude/runlength coding of the DCT coefficients.

Another disadvantage of discrete cosine transform is that it is rather complicated to implement.

The object of the present invention is to eliminate the above−described disadvantages and to provide a video signal compression method of a new type, which is also suitable for the coding of difference images, and which can be implemented considerably more simply than previously. The above−mentioned objects are achieved by means of a method according to the invention, which is characterized in that (i) each image block is scanned along a fractal curve which divides the image block into sub−blocks of at least one lower level of hierarchy so that one block of a higher level of hierarchy comprises several blocks of a lower level of hierarchy; (ii) the intensity values of pixels in each block of the lowest level of hierarchy are compared with each other, and each block is coded by a common intensity value whenever the pixel intensity values fulfill a predetermined deviation condition; (iii) when each sub−block of the block of the higher level of hierarchy is coded by a common intensity value, the sub−block intensity values are compared with each other, and each block of the higher level of hierarchy is coded by a common intensity value whenever the intensity values of its sub−blocks fulfill the predetermined deviation condition; and (iv) information about the way of coding of each block is transmitted to a receiver.

The basic idea of the invention is to adaptively utilize the local spatial redundancy of the image so that the image block as well as smaller hierarchic blocks into which the image block is divided are coded by a varying number of bits adapted to the contents of the image, that is, the sampling raster is varied in accordance with the image information. By means of the invention the total number of bits required in each particular case can be minimized irrespective of the contents of the image.

In the following the invention and its preferred embodiments will be described in more detail with reference to the examples of the attached drawing, in which

Figure 1a illustrates the forming of a fractal curve from U−shaped elements within an image block to be coded;

Figure 1b illustrates a finished scanning curve formed within the image block to be coded and the division of the image block into blocks of different levels of hierarchy;

Figure 2 is a block diagram of a transmitter applying the method according to the invention, and

Figure 3 is a block diagram of a receiver for receiving a video signal compressed in accordance with the invention.

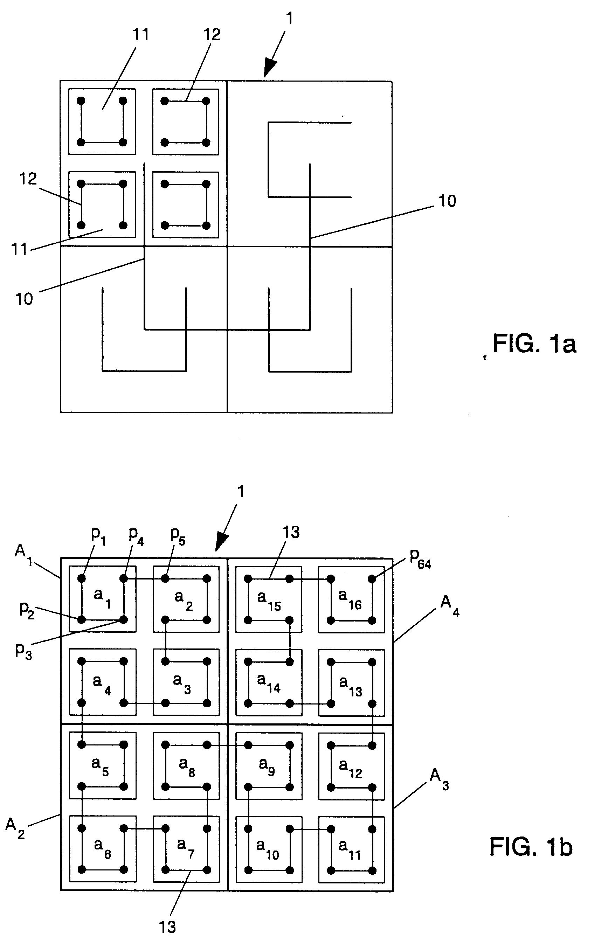

In the following the method according to the invention will be described in a case in which $n = m = 8$, that is, each image block 1 comprises $8 \times 8 = 64$ pixels. The fractal curve used in the method may be constructed, as shown in Figure 1a, from a U−shaped basic element 10 which is reduced by scaling and rotating so that a single U−shaped element 12 is finally obtained in each sub−block 11 comprising $2 \times 2$ pixels. Thereafter the adjacent end points of the elements are joined so that a finished fractal curve 13 shown in Figure 1b is obtained. As appears from Figure 1b, the scanning curve 13 passes through each pixel of the image block so that it forms hierarchic U−shaped sub−blocks each comprising four elements. These sub−blocks and elements are indicated as follows.

The pixels of each $8 \times 8$ block 1 are indicated with the references $p_1 \ldots p_{64}$ so that $p_1$ is the first pixel of the scanning curve 13 and $p_{64}$ is the last pixel. It can thus be indicated that the pixels $p_1$, $p_2$, $p_3$ and $p_4$ form a microblock $a_1$, the pixels $p_5$, $p_6$, $p_7$ and $p_8$ form a microblock $a_2$, etc., and the pixels $p_{61}$, $p_{62}$, $p_{63}$ and $p_{64}$ form the last microblock $a_{16}$. Further, the microblocks $a_1$, $a_2$, $a_3$ and $a_4$ form a miniblock $A_1$, the microblocks $a_5$, $a_6$, $a_7$ and $a_8$ form a miniblock $A_2$, the microblocks $a_9$, $a_{10}$, $a_{11}$ and $a_{12}$ form a miniblock $A_3$, and the microblocks $a_{13}$, $a_{14}$, $a_{15}$ and $a_{16}$ form a miniblock $A_4$. The entire $8 \times 8$ image block thus comprises four miniblocks $A_1 \ldots A_4$ each comprising four microblocks $a_1$ each comprising four pixels $p_1$.

In the method according to the invention the scanning of the image block is started from the pixel $p_1$ in accordance with the fractal curve 13 shown in Figure 1b, an intensity value corresponding to the pixel $p_1$ being $p'_1$. Generally, the first pixel of the microblock will be indicated $P_n$ and the respective intensity value $P'_n$. Scanning is performed microblock by microblock, and each microblock is coded as follows:

(1) if $p'n \approx p'_{n+1} \approx p'_{n+2} \approx p'_{n+3}$, the microblock is coded by the value $P'_n$, otherwise all four values are used.

The common intensity value $P'_n$ of all pixels of the microblock coded by a single intensity value is indicated by the reference $a'_i$. If all four microblocks $a_i$, $a_{i+1}$, $a_{i+2}$ and $a_{i+3}$ of a miniblock are each coded by a single intensity value $a'_i$, $a'_{i+1}$, $a'_{i+2}$, $a'_{i+3}$, the miniblock is coded as follows:

(2) if $a'_n \approx a'_{n+1} \approx a'_{n+2} \approx a'_{n+3}$, the miniblock is coded by the value $a'_n$, otherwise all four values are used.

The common intensity value $a'_n$ of all microblocks in the miniblock coded by a single intensity value is indicated by the reference $A'_i$.

If all four miniblocks of an image block are each coded by a single intensity value $A'_i$, $A'_{i+1}$, $A'_{i+2}$, $A'_{i+3}$, respectively, the block is coded as follows:

(3) if $A'_n \approx A'_{n+1} \approx A'_{n+2} \approx A'_{n+3}$, the block is coded by the value $A'_n$, otherwise all four values are used.

The condition of approximate equality ($\approx$) in the coding rules (1), (2) and (3) may be tested e.g. in the following advantageous way by calculating a criterion value $\delta$:

$$(4) \qquad \delta = \max \left\{ \left| \sum_{i=n}^{n+3} x_i/4 - x_j \right| \right\}$$

where $j = n, n+1, n+2, n+3$ and $x = p'$, $a'$ or $A'$. In the case of the microblock, the criterion value thus represents a maximum difference between the average of the intensity values of four pixels and the intensity value of an individual pixel. In the case of the miniblock, the criterion value represents a maximum difference between the average of the intensity values of four microblocks (of which each is coded by a single intensity value) and the intensity value of an individual microblock. Correspondingly, in the case of the image block, the criterion value represents a maximum difference between the average of the intensity values of four miniblocks (of which each is coded by a single intensity value) and the intensity value of an individual miniblock.

The criterion value $\delta$ is compared with a preselected threshold value $\epsilon$:

If $\delta < \epsilon$, the condition of approximate equality ($\approx$) is fulfilled. By adjusting the threshold value $\epsilon$, the coding error can be made arbitrarily small.

In the method according to the invention, a code to be transmitted comprises intensity value data and special indicator bits which indicate the way in which the image block, the miniblocks and the microblocks are coded.

There is one indicator bit for each image block, and when the indicator bit is one, it indicates that the miniblocks have been coded separately, and when it is zero, it indicates that the image block has been coded by a single intensity value, so that a single data word follows for this image block.

There is one indicator bit for each miniblock, and when the indicator bit is one, it indicates that the microblocks of the miniblock have been coded separately, and when it is zero, it indicates that the miniblock has been coded by a single intensity value, so that a single data word follows for this miniblock.

Similarly, there is one indicator bit for each microblock, and when the indicator bit is one, it indicates that the pixels of the microblock have been coded separately, and when it is zero, it indicates that the microblock has been coded by a single intensity value, so that a single data word follows for this microblock.

It is, of course, also possible to reverse the values of the indicator bits without affecting the basic principle.

With one block, the code produced by the video compression method according to the invention may be as follows:

L M U D U D U D U D M U D U D... etc.,

where

L = image block indicator bit

M = miniblock indicator bit

U = microblock indicator bit

D = data bits.

The length of an image−block−specific code depends on the information content of the block. In an extreme case where the block is uniformly grey (or black or white), the block is reduced into LD.

In the method according to the invention it is advantageous to use a DPCM method known *per se* for coding the intensity values, so that a preceding reconstructed intensity value is used as a prediction value. Due to the scanning sequence, the spacing between two adjacent elements to be coded is minimized, and so the correlation between them is also approximately maximized, on account of which the use of the DPCM method is effective in this connection.

The following table shows the coding efficiencies (bits/pixel) to be obtained by the method according to the invention when using three‑bit DPCM coding in association with the method and with the first pixel of the image block coded as a four‑bit PCM value. The size of the image block is 8 x 8 = 64 pixels, and as described above, it comprises four miniblocks and sixteen microblocks.

In the table, one microblock at a time is coded by a single intensity value so that the number of data words decreases accordingly. Correspondingly, when the miniblocks are coded by a single data word, the number of the microblock indicators decreases.

| Data words / block | Data bits / block | Indicator bits / block | Total bit number/ block | Bits / pixel |
|---|---|---|---|---|
| 64 | 193 | 21 | 214 | 3.34 |
| 61 | 184 | 21 | 205 | 3.20 |
| 58 | 175 | 21 | 196 | 3.06 |
| 55 | 166 | 21 | 187 | 2.92 |
| 52 | 157 | 21 | 178 | 2.78 |
| 49 | 148 | 17 | 165 | 2.58 |
| 46 | 139 | 17 | 156 | 2.44 |
| 43 | 130 | 17 | 147 | 2.30 |
| 40 | 121 | 17 | 138 | 2.15 |
| 37 | 112 | 17 | 126 | 1.97 |
| 34 | 103 | 13 | 116 | 1.81 |
| 31 | 94 | 13 | 107 | 1.67 |
| 28 | 85 | 13 | 98 | 1.53 |
| 25 | 76 | 13 | 89 | 1.39 |
| 22 | 67 | 13 | 80 | 1.25 |
| 19 | 58 | 9 | 67 | 1.05 |
| 16 | 49 | 9 | 58 | 0.91 |
| 13 | 40 | 9 | 49 | 0.76 |
| 10 | 31 | 9 | 40 | 0.63 |
| 7 | 22 | 9 | 31 | 0.48 |
| 4 | 13 | 5 | 18 | 0.28 |
| 1 | 4 | 1 | 5 | 0.08 |

It appears from the above table that the compression method according to the invention adapts the number of bits needed in the coding to the information contained in the image. For instance, the first line of the table describes a situation in which all pixels of the image block deviate from each other. It is thereby necessary to transmit the intensity value of each one of them, which results in the maximum total number of bits. Correspondingly, the last line of the table describes a situation in which the image block is uniformly grey (or black or white), in which case the entire image block is coded only by five bits (1 four‑bit PCM value + 1 block indicator bit).

It is known *per se* that the efficiency of the DPCM method can be further improved by using a quantization rule adapted to the local properties of the image to be coded. According to the preferred embodiment of the invention, when using the DPCM coding known *per se* and the quantization rule adapted to the local properties of the image, the quantization rule is selected separately for each micro‑, mini‑and image block, and so the above‑described indicator bits are expanded so that they comprise two or more bits, thus indicating the applied local quantization rule in addition to the information mentioned above.

Formula (4) may be used for the selection of the local quantization rule, as the criterion value $\delta$ describes the uniformity of the local area (sub−block) of the image so that the smaller the value $\delta$, the less the intensity values of the pixels of the particular image area deviate from each other. If the condition in accordance with the coding rules (1), (2) and (3) is not fulfilled, but the respective intensity values, however, deviate only slightly from each other, it is possible to apply a DPCM quantization rule comprising only a few quantization steps which can be presented by a small number of bits. In this way the DPCM bit number can be minimized so that it always corresponds to the local properties of the image. Therefore several threshold values $\epsilon_i$ are introduced, of which the smallest corresponds to the condition of approximate equality ($\approx$). Each quantization rule thereby has its own threshold value $\epsilon_1$, and a particular quantization rule is selected if the criterion value $\delta$ exceeds a preceding threshold value but does not exceed the threshold value of the particular quantization rule.

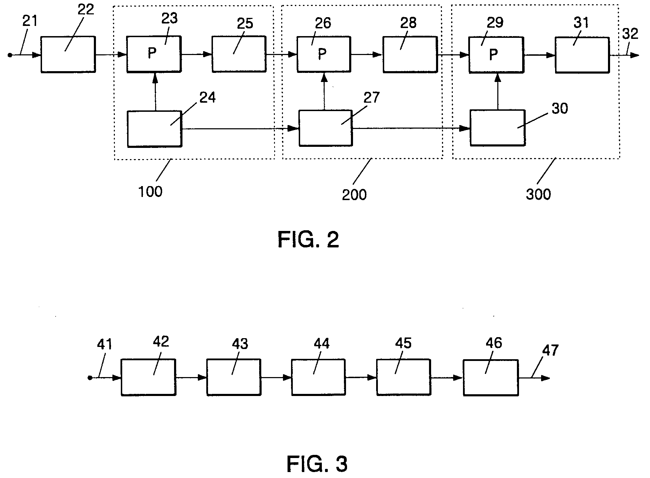

Figure 2 is a block diagram of a transmitter applying the method according to the invention. The transmitter comprises three sections connected in succession, viz. a microblock section 100, a miniblock section 200 and an image block section 300.

Pixel intensity value data 21 from an A/D converter (not shown) is applied to an image memory 22, which is connected to the input of the microblock section 100. The microblock section comprises a first processor circuit 23, a pixel counter 24 controlling the processor circuit 23, and a microblock memory 25 connected to the output of the processor circuit 23. From the image memory 22, the processor circuit 23 reads the pixel intensity values of each microblock $a_i$ of an image block 1 to be transmitted in a sequence indicated by the fractal scanning curve 13, compares the pixel intensity values with each other in accordance with Formula (4), and if they are approximately equal in accordance with Formula (1), the processor circuit 23 writes in the microblock memory 25 a data word descriptive of the intensity values and a microblock indicator bit U which is given the value 0. If the intensity values are not approximately equal, the processor circuit 23 writes in the memory 25 data words corresponding to all four intensity values, and the microblock indicator bit U, which in this case is given the value 1.

The output of the microblock memory 25 is connected to the miniblock section 200 comprising a second processor circuit 26, a microblock counter 27 controlling the processor circuit 26, and a miniblock memory 28 connected to the output of the processor circuit 26. Whenever the data of four microblocks $a_1$ corresponding to a single miniblock $A_1$ has been stored in the microblock memory 25, the second processor circuit checks whether all microblock indicator bits U corresponding to these microblocks have the value 0, and if so, whether the respective intensity values are also approximately equal in accordance with Formula (2). If the condition of approximate equality is also fulfilled, the second processor circuit 26 writes in the miniblock memory 28 one data word descriptive of the intensity values and the miniblock indicator bit M which is given the value 0. If the above−mentioned conditions are not fulfilled, the processor circuit 26 copies the data corresponding to the miniblock and its indicator bit as such from the microblock memory 25 and adds to it the miniblock indicator bit which is given the value 1.

The output of the miniblock memory 28 is connected to the image block section 300 comprising a third processor circuit 29, a miniblock counter 30 controlling the processor circuit 29, and an image block memory 31 connected to the output of the processor circuit 29. Whenever the data of four miniblocks A, corresponding to one image block 1 has been stored in the miniblock memory 28, the third processor circuit 29 checks whether all miniblock indicator bits M corresponding to these miniblocks have the value 0, and if so, whether the respective intensity values are also approximately equal in accordance with Formula (3). If the condition of approximate equality is also fulfilled, the processor circuit 29 writes in the image block memory 31 one data word descriptive of the intensity values and the image block indicator bit L, which is given the value 0. If the above−mentioned conditions are not fulfilled, the processor circuit 29 copies the data corresponding to the image block and its indicator bit as such from the miniblock memory 28 and adds to it the image block indicator bit L, which is given the value 1.

The reference numeral 32 indicates data readable from the image block memory 31 and applied to a possible compensation memory and further coding circuits (not shown). Data corresponding to one image block is read from the image block memory 31 in serial form so that the data which was written last is read first. So the data corresponding to one image block begins with the image block indicator bit L, and the rest of the data follows hierarchically so that the indicator bits come before the data corresponding to them.

The above−described operation is repeated unchanged from one image block to another until the entire image has been processed.

Figure 3 is a block diagram of a receiver for receiving a video signal compressed according to the invention. The receiver comprises a serial connection of a decompression circuit 42 for possible further compression, a compensation memory 43, a processor circuit 44, a reconstruction image memory 45, and a display memory 46. The reference numeral 41 indicates data coming to the receiver from the line, and the

EP 0 541 949 A2

reference numeral 47 indicates a digital video signal from the receiver.

The processor circuit 44 reads image block specific data from the compensation memory 43, and if the image block indicator bit L occurring first has the value 0, the processor circuit writes the intensity value data following the image block indicator bit in all pixel memory positions of the reconstruction image memory 45 which correspond to this particular image block, whereafter the processor circuit starts to decode the following image block. If the image block indicator bit has the value 1, it is followed by the miniblock indicator bit and miniblock data.

If the miniblock indicator bit M has the value 0, the processor circuit 44 writes the intensity value data following the miniblock indicator bit in all pixel memory positions of the reconstruction image memory 45 which correspond to this particular miniblock, whereafter the processor circuit starts to decode the following miniblock or image block. If the miniblock indicator bit has the value 1, it is followed by the microblock indicator bit and microblock data.

If the microblock indicator bit U has the value 0, the processor circuit 44 writes the intensity value data following the microblock indicator bit in all pixel memory positions of the reconstruction image memory 45 which correspond to this particular microblock, whereafter the processor circuit starts to decode the following microblock or miniblock. If the microblock indicator bit has the value 1, it is followed by four intensity values, which the processor circuit 44 writes in the pixel memory positions of the reconstruction memory 45 which correspond to the particular microblock, whereafter it starts to decode the following micro − or miniblock.

After the processor circuit 44 has decoded the entire image block in a manner described above, it starts to code the following image block. After the entire image has been processed and written in the reconstruction image memory 45, it is transferred to the display memory 46, from which it can be read as required by the display.

Even though the invention has been described above with reference to the example of the attached drawings, it is obvious that the invention is not restricted to it, but can be modified in various ways and within the inventive idea disclosed in the above description and in the attached claims. For instance, some other criterion value can be used in place of Formula (4) in testing the approximate equality of the intensity values of the pixels or that of the sub − blocks coded by a single intensity value.

## Claims

1. A video compression method for compressing a digitally coded video signal in connection with transmission, wherein image information is transmitted as successive image blocks (1) each comprising n x m pixels ($p_i$), **characterized** in that
   − each image block (1) is scanned along a fractal curve (13) which divides the image block (1) into sub − blocks ($A_i$; $a_i$) of at least one lower level of hierarchy so that one block of a higher level of hierarchy comprises several blocks of a lower level of hierarchy;
   − the intensity values of pixels ($p_i$) in each block ($a_i$) of the lowest level of hierarchy are compared with each other, and each block ($a_i$) is coded by a common intensity value whenever the pixel intensity values fulfill a predetermined deviation condition ($\delta<\epsilon$);
   − when each sub − block ($a_i$; $A_i$) of the block ($A_i$, 1, respectively) of the higher level of hierarchy is coded by a common intensity value, the sub − block intensity values are compared with each other, and each block ($A_i$; 1) of the higher level of hierarchy is coded by a common intensity value whenever the intensity values of its sub − blocks ($a_i$, $A_i$, respectively) fulfill the predeter − mined deviation condition ($\delta < \epsilon$), and
   − information about the way of coding of each block ($a_i$, $A_i$, 1) is transmitted to a receiver.

2. A method according to claim 1, **characterized** in that the condition $\delta < \epsilon$ is used as the deviation condition, where the criterion value $\delta$ describes, in the case of the block ($a_i$) of the lowest level of hierarchy, a maximum difference between the average of the intensity values of the pixels of the block and the intensity value of an individual pixel, and in the case of the block ($A_i$, 1) of the higher level of hierarchy, a maximum difference between the average of the intensity values of the sub − blocks ($a_i$,$A_i$, respectively) of the block, each sub − block being coded by a single intensity value, and the intensity value of an individual sub − block; and where $\epsilon$ is a preselected threshold value.

3. A method according to claim 1, characterized in that information about the way of coding is transmitted by using at least one indicator bit (L) for each image block (1), the indicator bit indicating whether all the sub − blocks ($A_i$) forming the image block are coded with a single intensity value, and correspond −

6

ingly, by using, if required, at least one indicator bit (M, U) for each block ($A_i$, $a_i$, respectively) of a lower level of hierarchy, the indicator bit indicating whether all sub−blocks forming said block are coded by a single intensity value, and said at least one indicator bit (U) of each block ($a_i$) of the lowest level of hierarchy indicating whether the pixels ($p_i$) of said block are coded by a single intensity value.

4. A method according to claim 1 or 3, **characterized** in that the coding utilizes a DPCM method known *per se*, a preceding reconstructed intensity value being used as a prediction value for each intensity value.

5. A method according to claim 4 and 3, utilizing an quantization rule adapted to the local properties of the image, **characterized** in that the quantization rule is selected separately for each image and sub−block by using at least two indicator bits so that said indicator bits (L, M, U) also indicate the local quantization rule concerning the respective image block or sub−block.

6. A method according to claim 2 and 5, **characterized** in that the local quantization rule is also selected on the basis of the applied criterion value $\delta$ by introducing several threshold values $\epsilon_i$ (i = 1, 2, 3, etc. and $\epsilon_1 < \epsilon_2 < \epsilon_3$, etc.) so that $\epsilon_1 = \epsilon$ and a specific quantization rule corresponds to each one of the other threshold values $\epsilon_i$ (i = 2, 3, etc.).

FIG. 1a

FIG. 1b

**FIG. 2**

**FIG. 3**